# EUROPEAN PATENT APPLICATION

(11) **EP 3 734 333 A1**
(43) Date of publication of application: **04.11.2020**
(21) Application number: 18896777.2
(22) Date of filing: 13.12.2018
(51) Int. Cl.: G02B 5/08

(54) **REFLECTION STRUCTURE AND APPLICATION THEREOF**

(30) Priority: 27.12.2017 CN 201711444102
(71) Applicant: Ningbo Solartron Technology Co., Ltd., Ningbo, Zhejiang 315031 (CN)
(72) Inventor: JIN, Yadong, Ningbo, Zhejiang 315031 (CN); YANG, Chenghan, Ningbo, Zhejiang 315031 (CN); GU, Yong, Ningbo, Zhejiang 315031 (CN); JIANG, Fuyun, Ningbo, Zhejiang 315031 (CN); XIONG, Fei, Ningbo, Zhejiang 315031 (CN); ZHANG, Qiang, Ningbo, Zhejiang 315031 (CN); ZHU, Zhengping, Ningbo, Zhejiang 315031 (CN)
(74) Representative: Meyer-Dulheuer MD Legal Patentanwälte PartG mbB
(86) International application number: PCT/CN2018/120988
(87) International publication number: WO 2019/128728

(57) **Abstract**

The present disclosure provides a reflection structure and the application thereof in a panel lamp and display. The reflection structure can include a reflection layer (1), a light shielding layer (3) and an enhancement layer (2) stacked together. The light shielding layer (3) can have a thickness in a range of 10 nm to 250 µm, and the reflection structure can have a density in a range of 0.5 g/cm³ to 2.7 g/cm³.

## Description

### CROSS-REFERENCE TO RELATED APPLICATIONS

This application claims all benefits from China Patent Application No. 201711444102.2, filed on December 27, 2017, in the China National Intellectual Property Administration.

### TECHNICAL FIELD

The present disclosure relates to the field of optoelectronic technology, and in particular, to reflection structures and their applications.

### BACKGROUND

A backlight module, as an important part of a flat panel display, is mainly divided into a side light type or a straight down type, and a main difference between the two types is an incident mode of the light source. The backlight module with the side light type includes the light source on the side, the direction of the light emitted by the Light Emitting Diode (LED) can change when passing through a light guide plate, part of the light will be directly emitted from the light guide plate, and other part of the light will be directed to the reflection film. The backlight module with the side light type can be composed of a back plate, a reflection film, the light guide plate, a diffusion film, a light-enhancing film, and LED lamp beads (or light bars). The bottom of the backlight module is the back plate and the reflection film. Generally, a thickness of the metal back plate can be in a range of 600 µm to 800 µm, a thickness of the reflection film can be in a range of 50 µm to 500 µm, and a total of the thickness of the metal back plate and the thickness of the reflection film may be in a range of 650 µm to 1300 µm. The weight of the metal back plate may be very large, which greatly increases the weight of the product including the backlight module.

LED is widely applied in the field of lighting and displays with the advantages of power saving, high brightness, and long life. The structure of side emitting LED panel lamps usually includes a metal back plate, a foam layer, a reflection film (i.e. a reflective paper), a light guide plate, a diffuser plate, and a plurality of LED strips (or lamp beads) located around in order from bottom to top. Generally, a thickness of the metal back plate can be in a range of 0.3 mm to 0.5 mm, a thickness of the foam layer can be in a range of 1.0 mm to 1.5 mm, a thickness of the reflection film can be in a range of 0.050 mm to 0.500 mm, a thickness of the light guide plate can be in a range of 2.0 mm to 3.0 mm, and a thickness of the diffusion plate can be about 1.2 mm. An overall thickness of the LED panel lamp can reach to 6 mm to 10 mm. The foam layer can be disposed between the metal back plate and the reflection film (or reflection paper) and play a role in fixing the reflection film and preventing the reflection film from warping due to the heat, but it may significantly increase the thickness of the LED panel lamp. The metal back plate is heavy and it will require a large number of screws to fix the metal back plate, resulting in low assembly efficiency and troublesome rework.

Therefore, in order to meet the market demand, it is necessary to develop light and thin reflection structure or components with certain stiffness.

### SUMMARY

In order to achieve the above object, the present disclosure provides following reflection structures and their applications. The reflection structure can not only be thin and light, but also has a large stiffness. The panel lamp and display including the reflection structure can be lighter in weight, smaller in thickness, and easy to assemble.

A reflection structure includes a reflection layer, a light shielding layer and an enhancement layer stacked together. A thickness of the light shielding layer is in a range of 10 nm to 250 µm, and a density of the reflection structure is in a range of 0.5 g/cm³ to 2.7 g/cm³.

In some embodiments, a thickness of the reflection layer is in a range of 50 µm to 500 µm, and a thickness of the enhancement layer is in a range of 50 µm to 1000 µm.

In some embodiments, a ratio of a sum of the thickness of the enhancement layer and the thickness of the light shielding layer to the thickness of the reflection layer is greater than 0.55:1.

In some embodiments, the ratio of the sum of the thickness of the enhancement layer and the thickness of the light shielding layer to the thickness of the reflection layer is in a range of 0.6:1 to 1.8:1.

In some embodiments, under a temperature of 30 degrees centigrade to 80 degrees centigrade, a coefficient of thermal expansion of the reflection structure in a longitudinal direction is in a range of 10⁻⁶ cm/(cm·°C) to 10⁻⁴ cm/(cm·°C), and a coefficient of thermal expansion of the reflection structure in a lateral direction is in a range of 10⁻⁶ cm/(cm·°C) to 10⁻⁴ cm/(cm°C).

In some embodiments, under a temperature of 30 degrees centigrade to 80 degrees centigrade, a coefficient of thermal expansion of the reflection layer in a longitudinal direction is in a range of 10⁻⁶ cm/(cm·°C) to 10⁻⁴ cm/(cm·°C), and a coefficient of thermal expansion of the reflection layer in a lateral direction is in a range of 10⁻⁶ cm/(cm·°C) to 10⁻⁴ cm/(cm·°C).

In some embodiments, under a temperature of 30 degrees centigrade to 80 degrees centigrade, a coefficient of thermal expansion of the enhancement layer in a longitudinal direction is in a range of 10⁻⁶ cm/(cm·°C) to 10⁻⁴ cm/(cm·°C), and a coefficient of thermal expansion of the enhancement layer in a lateral direction is in a range of 10⁻⁶ cm/(cm·°C) to 2×10⁻⁴ cm/(cm·°C).

In some embodiments, under a temperature of 30 degrees centigrade to 80 degrees centigrade, a coefficient of thermal expansion of the light shielding layer is in a range of 10⁻⁷ cm/(cm·°C) to 3.0×10⁻⁴ cm/(cm·°C).

In some embodiments, a light transmittance of the light shielding layer is less than or equal to 20%.

In some embodiments, the light shielding layer is at least one of a metal layer, a metal plated film, a hot gold foil, a laser film, an ink layer, a composite layer of an oxide and a polymer, and a light shielding plastic film.

In some embodiments, the composite layer of the oxide and the polymer comprises one oxide layer and one polymer layer stacked; or the composite layer of the oxide and the polymer comprises at least two oxide layers and the at least two polymer layers, which are stacked one by one alternately, wherein a material of the oxide layer is at least one of SiOx and AlOx, and a material of the polymer layer is an acrylic polymer.

In some embodiments, a material of the reflection layer is a plastic and the plastic is at least one of polyethylene terephthalate, polypropylene terephthalate, polybutylene terephthalate, polyethylene naphthalate, polyvinyl chloride, polycarbonate, polyethylene, polypropylene, polystyrene, and polyamide.

In some embodiments, a material of the enhancement layer is glass and/or the plastic.

In some embodiments, the reflection layer comprises a plurality of micropores.

In some embodiments, the reflection layer comprises a PET layer and a plurality of micropores distributed in the PET layer, the enhancement layer is a PET layer, and the light shielding layer is a metal-plated film, wherein the metal-plated film is a metal-plated PET film.

In some embodiments, the light shielding layer is disposed between the reflection layer and the enhancement layer; or
The enhancement layer is disposed between the reflection layer and the light shielding layer.

The reflection structure can not only be thin and light, but also has a high brightness, a large stiffness and light-shielding property. There will be no collapse deformation, light leakage phenomenon, and any warpage or deformation etc., even though the reflection structure is used for a long time. It is easy to process and assemble.

A panel lamp including a light guide plate and a frame can be further provided. The panel lamp can further include the reflection structure, and the light guide plate and the reflection structure are fixed by the frame.

The panel lamp including the reflection structure canbe lighter in weight, smaller in thickness, and easy to assemble.

A display including a backlight module having a light guide plate and a frame can be further provided. The backlight module can further include the reflection structure, and the light guide plate and the reflection structure are fixed by the frame.

The display including the reflection structure can be lighter in weight, smaller in thickness, and easy to assemble.

### BRIEF DESCRIPTION OF THE DRAWINGS

FIG. 1 is a cross-sectional view of a reflection structure in one embodiment of the present disclosure;
FIG. 2 is a cross-sectional view of a reflection structure in another embodiment of the present disclosure;
FIG. 3 is a cross-sectional view of a reflection structure in another embodiment of the present disclosure.

In the drawing, 1 represents a reflection structure; 2 represents an enhancement layer; 3 represents a light shielding layer; and 11 represents micropores.

### DETAILED DESCRIPTION

The present disclosure will be further described in detail below with reference to the drawings and specific embodiments, in order to better understand the reflection structure in the embodiments of the present disclosure.

The present disclosure provides a reflection structure in a flat-plate shape. The reflection structure can have the advantages of simplify structure and light weight, such that it can replace the metal back plate and the reflection layer in the backlight module, or the metal back plate, the foam layer and the reflection structure in the side emitting LED panel lamp, to solve the problems such as not thin and light enough, and difficult to assemble, of the panel lamp or flat panel display.

The reflection structure can include a reflection layer 1, an enhancement layer 2, and a light shielding layer 3 that are stacked together.

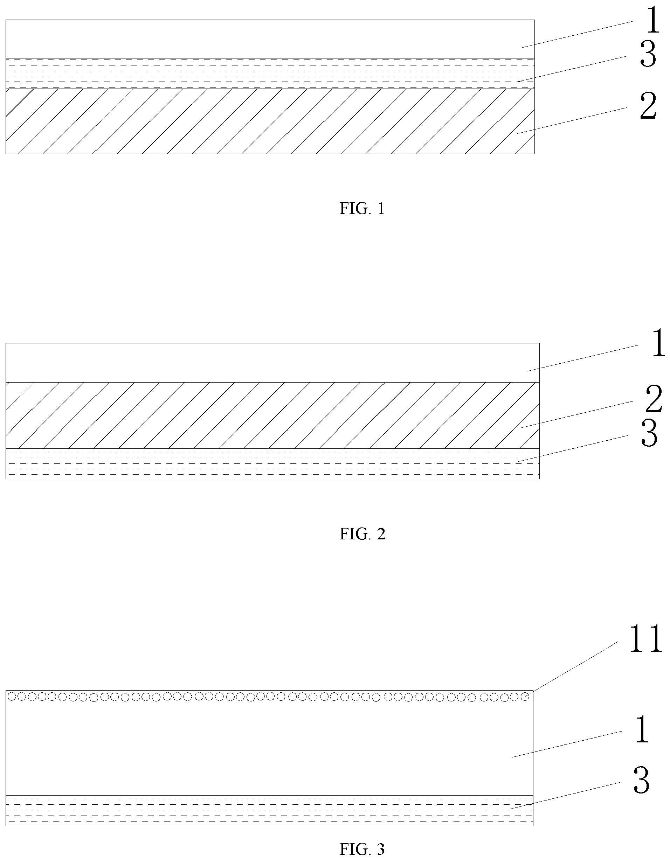

In detail, the reflection structure can have two structures. In one embodiment, referring to FIG. 1, the light shielding layer 3 can be disposed between the reflection layer 1 and the enhancement layer 2. In another embodiment, referring to FIG. 2, the enhancement layer 2 can be disposed between the reflection layer 1 and the light shielding layer 3.

In the reflection structure shown in FIG. 1, the light shielding layer 3 between the reflection layer 1 and the enhancement layer 2 can be protected in order to prevent any light leakage when the light shielding layer 3 may be scratched.

In detail, a thickness of the reflection layer 1 can be in a range of 50 µm to 500 µm. A thickness of the enhancement layer 2 can be in a range of 50 µm to 1000 µm. A thickness of the light shielding layer 3 can be in a range of 10 nm to 250 µm, preferably, in a range of 200 nm to 250 µm, and more preferably, in a range of 1 µm to 250 µm.

In the reflection structure, a light transmittance of the light shielding layer 3 can be less than or equal to 20%. When meeting the requirement of the light transmittance of the light shielding layer 3 being less than or equal to 20%, the reflection structure can have a good light shielding property. If considering more demanding application environment and requirements, the light transmittance of the light shielding layer 3 can be preferably less than or equal to 15%, and further more preferably, the light transmittance of the light shielding layer 3 is less than or equal to 12%.

The light shielding layer 3 can be at least one of a metal layer, a metal plated film, a hot gold foil, a laser film, an ink layer, a composite layer of an oxide and a polymer, and a light shielding plastic film. The light shielding layer 3 has a good light shielding effect by controlling the light shielding rate and thickness. And it will improve the workability and transportation convenience of the reflection structure.

When the light shielding layer 3 is the metal layer, the light shielding layer 3 can be a metal foil formed by extending a metal material, or formed by directly depositing a metal material on the enhancement layer 2. The depositing method can be a physical depositing method or a chemical depositing method. Preferably, the depositing method can be the physical depositing method. The physical depositing method is at least one of electroplating, evaporation, or sputtering. The metal material can be at least one of Al, Cu, Zn, Ag, and Au, and preferably, the metal material can be Al.

The metal plated film can include a metal layer and a base layer. A material of the metal layer can be at least one of Al, Cu, Zn, Ag, and Au. Preferably, the material of the metal layer can be Al. A material of the base layer can be at least one of polyethylene terephthalate (PET), polypropylene terephthalate (PPT), polybutylene terephthalate (PBT), polyethylene naphthalate (PEN), polyvinyl chloride (PVC), polycarbonate (PC), polyethylene (PE), polypropylene (PP), polystyrene (PS), and polyamide (PA). Preferably, the material of the base layer can be polyethylene terephthalate (PET).

The composite layer of the oxide and the polymer can include at least one oxide layer and at least one polymer layer. For example, in one embodiment, the composite layer of the oxide and the polymer can include one oxide layer and one polymer layer stacked. In another embodiment, the composite layer of the oxide and the polymer can include at least two oxide layers and the at least two polymer layers, such as by coating process, which are stacked one by one alternately. The material of the oxide layer can be at least one of SiOx and AlOx, and the material of the polymer layer can be an acrylic polymer.

The material of the ink layer can be light shielding ink.

The light shielding plastic film can be made of plastic and a pigment. The plastic can be at least one of PET, PPT, PBT, PEN, PVC, PC, PE, PP, PS, and PA. Preferably, the plastic can be PET. The pigment can be at least one of titanium dioxide and carbon black, preferably, a combination of the titanium dioxide and carbon black.

In the reflection structure, a material of the reflection layer 1 can be plastic, and the material of the plastic can be at least one of PET, PPT, PBT, PEN, PVC, PC, PE, PP, PS, and PA.

In the reflection structure, a material of the enhancement layer 2 can be at least one of glass and plastic. And the glass can be flexible glass.

In some embodiments, a plurality of micropores can be distributed in the reflection layer 1. The plurality of micropores can be evenly distributed in the reflection layer and the pore size of the plurality of micropores is uniform.

The plurality of the micropores can be formed in the process of preparing the reflection layer 1. The inside of the plurality of the micropores can be air, and the refractive index can be only 1.0. There can be a huge refractive index difference between the material of the reflection layer 1 and the inside of the plurality of the micropores. Therefore, when light passes through the micropores inside the reflection layer 1, reflection, refraction and re-reflection will occur, thereby enhancing a reflection efficiency of the reflection structure. In addition, the plurality of the micropores can play a role of scattering light, resulting in whitening the reflection structure and forming a white film.

In one embodiment, when the reflection layer 1 is a silver reflection film (i.e. Enhanced Specular Reflector), since the silver reflection film can be composed of thousands or even tens of thousands of layers of plastic films, there are no micropores 11 in the silver reflection film. When light hits the surface of the silver reflection film and enters the inside of the silver reflection film, the light will be refracted, reflected, re-refracted, and re-reflected thousands of times or even tens of thousands of times. It is difficult to pass through the silver reflection film, and eventually it will be reflected back. The reflection efficiency of silver reflection film can be extremely high.

In order to ensure the stiffness of the enhancement layer 2 and even the stiffness of the reflection structure, the enhancement layer 2 does not include any microporous.

The reflection structure can further include an adhesive layer, and the thickness of the adhesive layer can be in a range of 1 µm to 50 µm. The reflection layer 1, the enhancement layer 2 and the light shielding layer 3 can be stacked together by the adhesive layer.

A material of the adhesive layer can be at least one of thermal curing adhesive, optical curing adhesive or pressure sensitive adhesive.

The thermal curing adhesive can be selected from at least one of acrylic resin, urethane resin, epoxy resin, polyester resin, and silicone resin.

The optical curing adhesive can be selected from at least one of epoxy acrylate, urethane acrylate, polyether acrylate, polyester acrylate, and acrylic resin.

The pressure sensitive adhesive can be selected from at least one of acrylic pressure sensitive adhesive, polyurethane pressure sensitive adhesive, polyurethane modified acrylic pressure sensitive adhesive, OCA optical adhesive, silicone modified polyurethane pressure sensitive adhesive, and silicone modified acrylic pressure sensitive adhesive.

Of course, the reflection structure may also be an integrate structure. Referring to FIG. 3, the reflection structure can include a reflection layer 1 having a first surface and a second surface opposite to each other. Furthermore, the reflection layer 1 can include the plurality of micropores 11 distributed near the first surface. The light shielding layer 3 can be provided on or close to the second surface of the reflection layer 1.

It can be understood that when a part of the reflection layer 1 close to the first surface is composed of thousands or even tens of thousands of layers of plastic film, a structure similar to the silver reflection film (i.e. Enhanced Specular Reflector) can be formed. There can be no micropore distribution close to the first surface. Even, as the proportion of the silver reflection film in the reflection layer 1 increases, that is, the reflection layer 1 is composed of thousands or even tens of thousands of layers of plastic films from the first surface to the second surface, the thickness of the light shielding layer 3 can be reduced or even eliminated when the requirement of reflectivity is satisfied.

Therefore, a density of the reflection structure can be in a range of 0.5 g/cm³ to 2.7 g/cm³ by selecting the thickness and materials of the reflection layer 1, the enhancement layer 2 and the light shielding layer 3. Due to the density in this range, the reflection structure can not only satisfy the stiffness requirements, but also can be thinner and lighter.

Specifically, in order to prevent the reflection structure from warping for a long time, a coefficient of thermal expansion of the reflection structure may be limited. Under a temperature of 30 degrees centigrade to 80 degrees centigrade, a coefficient of thermal expansion of the reflection structure in a longitudinal direction can be in a range of 10⁻⁶ cm/(cm·°C) to 10⁻⁴ cm/(cm·°C), and a coefficient of thermal expansion of the reflection structure in a lateral direction can be in a range of 10⁻⁶ cm/(cm·°C) to 10⁻⁴ cm/(cm°C).

In detail, under a temperature of 30 degrees centigrade to 80 degrees centigrade, a coefficient of thermal expansion of the reflection layer 1 in a longitudinal direction can be in a range of 10⁻⁶ cm/(cm·°C) to 10⁻⁴ cm/(cm·°C), and a coefficient of thermal expansion of the reflection layer 1 in a lateral direction can be in a range of 10⁻⁶ cm/(cm·°C) to 10⁻⁴ cm/(cm·°C).

Under a temperature of 30 degrees centigrade to 80 degrees centigrade, a coefficient of thermal expansion of the enhancement layer 2 in a longitudinal direction can be in a range of 10⁻⁶ cm/(cm·°C) to 10⁻⁴ cm/(cm·°C), and a coefficient of thermal expansion of the enhancement layer 2 in a lateral direction can be in a range of 10⁻⁶ cm/(cm·°C) to 2×10⁻⁴ cm/(cm·°C).

Under a temperature of 30 degrees centigrade to 80 degrees centigrade, a coefficient of thermal expansion of the light shielding layer 3 can be in a range of 10⁻⁷ cm/(cm °C) to 3.0×10⁻⁴ cm/(cm·°C).

It can be understood that the differences of the coefficient of thermal expansion in a lateral direction between the reflection layer 1, the enhancement layer 2 and the light shielding layer 3 and the differences of the coefficient of thermal expansion in a longitudinal direction between the reflection layer 1, the enhancement layer 2 and the light shielding layer 3 can be controlled as small as possible. Therefore, during the long-term use, light leakage or collapse can be prevented due to the small difference of thermal expansion property between the layers of the reflection structure.

Preferably, when the reflection layer 1, the enhancement layer 2 or the light shielding layer 3 with a large coefficient of thermal expansion is used, the thickness of the reflection layer 1, the enhancement layer 2 or the light shielding layer 3 will be correspondingly thinned to prevent the reflection layer 1, the enhancement layer 2 and the light shielding layer 3 being peeled off due to thermal expansion.

In some embodiments, in order to prevent the reflection structure collapsing and deforming, a ratio of the thickness of the reflection structure may be defined. A ratio of a sum of the thickness of the enhancement layer and the thickness of the light shielding layer to the thickness of the reflection layer can be greater than 0.55:1.

Preferably, the ratio of the sum of the thickness of the enhancement layer and the thickness of the light shielding layer to the thickness of the reflection layer can be in a range of 0.6:1 to 1.8:1. Such that the thickness, relative brightness, weight, stiffness and light-shielding property of the reflection structure can reach a relatively excellent state.

Preferably, the materials of the reflection layer 1, the enhancement layer 2 and the light shielding layer 3 can be made of the same material. For example, in one embodiment, the reflection layer can include a PET layer with a plurality of micropores distributed therein, the enhancement layer can be a PET layer, and the light shielding layer can be a metal plated film, such as a metal plated PET film.

Furthermore, the metal plated PET film can be aluminum plated PET film. Therefore, the coefficient of thermal expansion and other parameters between the reflection layer 1, the enhancement layer 2 and the light shielding layer 3 can be kept in better consistency, so that the reflection structure will not cause light leakage, collapse or other phenomena due to different thermal expansion during long-term use.

Therefore, the reflection structure of the present disclosure has the advantages of light weight, small thickness, good stiffness, good shading rate, high brightness, and easy assembly, and at the same time, can effectively reduce transportation costs and processing difficulties.

The present disclosure also provides a panel lamp including a light guide plate and a frame. The panel lamp can further include the reflection structure, and the light guide plate and the reflection structure can be fixed by the frame. Therefore, the panel lamp with the reflection structure can be lighter in weight, smaller in thickness and easy to assemble.

The present disclosure also provides a display including a backlight module. The backlight module can include a light guide plate and a frame. Furthermore, the backlight module can also include the reflection structure. The light guide plate and the reflection structure can be fixed by the frame. Therefore, the display including the reflection structure can be lighter in weight, thinner in thickness and easy to assemble.

Hereinafter, the reflection structure and its application will be further described through the following specific embodiments.

The reflection structure provided by the present disclosure can be mainly tested and evaluated its following properties:
(1) Thickness: along the thickness direction of the reflection structure, using a micrometer to test the thickness of corresponding positions every 50 mm, and measuring the thickness of 5 positions in total, and calculating the average value to obtain the thickness.
(2) Stiffness: cutting the reflection structure to the corresponding size and shape, replacing the metal back plate, the foam layer and the reflection film in the panel lamp (size: 600 mm × 600 mm) with the reflection structure (wherein, the thickness of the metal back plate of the panel lamp is 400 µm, the thickness of the foam layer is 1500 µm, and the thickness of the reflection film is 300 µm), and observing whether the reflection structure collapses and deforms.
(3) Shading: cutting the reflection structure to the corresponding size and shape, replacing the metal back plate, the foam layer and the reflection film in the above panel lamp (size: 600 mm × 600 mm) with the reflection structure, lighting the panel lamp, and observing if there is any light leakage from the back of the panel lamp. If no light leakage, it will prove that the reflection structure has good shading property; otherwise, it means that the reflection structure has poor shading property.
(4) Relative brightness: cutting the reflection structure to the corresponding size and shape, replacing the metal back plate, the foam layer and the reflection film in the above panel lamp (size: 600 mm × 600 mm) with the reflection structure, and lighting the panel lamp. The brightness of 9 locations on the panel lamp is tested by BM-7A luminance meter made by Japan Topcon and calculated the average value to obtain the brightness L of the panel lamp. The brightness L₀ of the original panel lamp (size: 600 mm × 600 mm) is tested in the same way. A relative brightness of the panel lamp is obtained by the formula of 100×L/L₀. The larger the value of the relative brightness is, the higher the brightness of the panel lamp is.
(5) Weight: weighing the above panel lamp (size: 600 mm × 600 mm) using an electronic scale, cutting the reflection structure to a size of 570 mm × 570 mm and replacing the metal back plate, the foam layer and the reflection film in the above panel lamp (size: 600 mm × 600 mm) with the reflection structure (size: 570 mm × 570 mm), using the electronic scale to weigh the panel lamp including the reflection structure.

### Embodiment 1

Referring to FIG. 2, a reflection structure in Embodiment 1 includes a PET film with a thickness of 50 µm as an enhancement layer, an Al plated PET film as a light shielding layer, and a PET reflection film with a thickness of 50 µm as a reflection layer. The Al plated PET film is prepared by depositing an Al layer with a thickness of 1 µm on one surface of the PET film. The PET reflection film is pasted on the other surface of the PET film by an adhesive layer. The thickness of the adhesive layer is 1 µm. And a material of the adhesive layer is acrylic resin thermosetting adhesive.

### Embodiment 2

Referring to FIG. 2, a reflection structure in Embodiment 2 includes a PET film with a thickness of 50 µm as an enhancement layer, a PET reflection film with a thickness of 50 µm, and an Al plated PET film with a thickness of 1 µm. The PET reflection film and the Al plated PET film are pasted on both sides of the PET film by an adhesive layer. The thickness of the adhesive layer is 1 µm. And a material of the adhesive layer is acrylic resin thermosetting adhesive.

### Embodiment 3

Referring to FIG. 2, a reflection structure in Embodiment 3 includes a PET film with a thickness of 150 µm as an enhancement layer, a PET reflection film with a thickness of 250 µm, and an Al plated PET film with a thickness of 15 µm. The PET reflection film and the Al plated PET film are pasted on both sides of the PET film by an adhesive layer. The thickness of the adhesive layer is 15 µm. And a material of the adhesive layer is acrylic resin thermosetting adhesive.

### Embodiment 4

A reflection structure in Embodiment 4 is substantially the same as the reflection structure in Embodiment 3, except that a thickness of a PET reflection film is 188 µm.

### Embodiment 5

A reflection structure in Embodiment 5 is substantially the same as the reflection structure in Embodiment 3, except that a thickness of a PET reflection film is 225 µm.

### Embodiment 6

A reflection structure in Embodiment 6 is substantially the same as the reflection structure in Embodiment 3, except that a thickness of a PET reflection film is 250 µm.

### Embodiment 7

A reflection structure in Embodiment 7 is substantially the same as the reflection structure in Embodiment 3, except that a thickness of a PET reflection film is 300 µm.

### Embodiment 8

Referring to FIG. 2, a reflection structure in Embodiment 8 includes a PET plastic sheet with a thickness of 1000 µm as an enhancement layer, a PET reflection film with a thickness of 500 µm, and an Al plated PET film with a thickness of 250 µm. The PET reflection film and the Al plated PET film are pasted on both sides of the plastic sheet by an adhesive layer. The thickness of the adhesive layer is 50 µm. And a material of the adhesive layer is acrylic resin thermosetting adhesive.

### Embodiment 9

Referring to FIG. 2, a reflection structure in Embodiment 9 includes a PET film with a thickness of 188 µm as an enhancement layer, a PET reflection film with a thickness of 300 µm, and an Al plated PET film with a thickness of 15 µm. The PET reflection film and the Al plated PET film are pasted on both sides of the PET film by an adhesive layer. The thickness of the adhesive layer is 15 µm. And a material of the adhesive layer is thermosetting acrylic resin.

### Embodiment 10

A reflection structure in Embodiment 10 is substantially the same as the reflection structure in Embodiment 9, except that a thickness of a PET film is 225 µm.

### Embodiment 11

A reflection structure in Embodiment 11 is substantially the same as the reflection structure in Embodiment 9, except that a thickness of a PET film is 250 µm.

### Embodiment 12

A reflection structure in Embodiment 12 is substantially the same as the reflection structure in Embodiment 9, except that a thickness of a PET film is 300 µm.

### Embodiment 13

A reflection structure in Embodiment 13 is substantially the same as the reflection structure in Embodiment 9, except that a thickness of a PET film is 500 µm.

### Embodiment 14

Referring to FIG. 2, a reflection structure in Embodiment 14 includes a PC film with a thickness of 250 µm as an enhancement layer, a polypropylene reflection film with a thickness of 300 µm, and an Al foil with a thickness of 15 µm. The polypropylene reflection film and the Al foil are pasted on both sides of the PC film by an adhesive layer. The thickness of the adhesive layer is 15 µm. And a material of the adhesive layer is epoxy acrylate optical curing adhesive.

### Embodiment 15

Referring to FIG. 2, a reflection structure in Embodiment 15 includes a PVC film with a thickness of 250 µm as an enhancement layer, a polycarbonate reflection film with a thickness of 300 µm, and a laser film with a thickness of 15 µm. The polycarbonate reflection film and the laser film are pasted on both sides of the PVC film by an adhesive layer. The thickness of the adhesive layer is 15 µm. And a material of the adhesive layer is acrylic pressure sensitive adhesive.

### Embodiment 16

Referring to FIG. 2, a reflection structure in Embodiment 16 includes a flexible glass with a thickness of 250 µm as an enhancement layer, a silver-plated reflection film with a thickness of 100 µm, and a foil paper with a thickness of 15 µm. The silver-plated reflection film and the foil paper are pasted on both sides of the flexible glass by an adhesive layer. The thickness of the adhesive layer is 15 µm. And a material of the adhesive layer is OCA optical adhesive.

### Embodiment 17 to Embodiment 32

A reflection structure in Embodiment 17 to Embodiment 32 are substantially the same as the reflection structure in Embodiment 1 to Embodiment 16 in order and respectively, except that the light shielding layer 3 is located between the reflection layer 1 and the enhancement layer 2.

### Comparative Embodiment 1

A reflection structure of a LED panel lamp in Comparative Embodiment 1 only includes a reflection film, and there is no metal back plate or no foam layer in the reflection structure.

### Comparative Embodiment 2

A reflection structure of a LED panel lamp in Comparative Embodiment 2 includes a metal back plate, a foam layer and a reflection film, wherein a thickness of the metal back plate is 400 µm, a thickness of the foam layer is 1500 µm, and a thickness of the reflection film is 300 µm.

### Comparative Embodiment 3

A reflection structure in Comparative Embodiment 3 is substantially the same as the reflection structure in Embodiment 9, except that a thickness of a PET film is 150 µm.

The thickness, stiffness, light-shielding property, relative brightness and weight of the reflection structures of Embodiment 1 to Embodiment 16 and Comparative Embodiment 1 to Comparative Embodiment 3 were tested. The test results were shown in Table 1.

**Table 1**

| | Thickness in total (µm) | Density (g/cm³) | Light transmittanc e (%) | Collapse deformation | Shading | Relative brightness (%) | Weight / kg |
|---|---|---|---|---|---|---|---|
| Embodiment 1 | 102 | 1.03 | 12.52 | N | N | 100 | 1.7 |
| Embodiment 2 | 103 | 1.05 | 13.60 | N | N | 100 | 1.7 |
| Embodiment 3 | 445 | 1.12 | 0.85 | N | N | 102 | 1.9 |
| Embodiment 4 | 483 | 1.14 | 0.88 | N | N | 103 | 1.9 |
| Embodiment 5 | 520 | 1.15 | 0.75 | N | N | 104 | 1.9 |
| Embodiment 6 | 545 | 1.10 | 0.80 | N | N | 105 | 1.9 |
| Embodiment 7 | 595 | 1.14 | 0.71 | N | N | 106 | 1.9 |
| Embodiment 8 | 1850 | 1.19 | 1.08 | N | N | 108 | 2.4 |
| Embodiment 9 | 533 | 1.15 | 1.13 | N | N | 106 | 1.9 |
| Embodiment 10 | 570 | 1.13 | 1.15 | N | N | 106 | 1.9 |
| Embodiment 11 | 595 | 1.12 | 1.09 | N | N | 106 | 1.9 |
| Embodiment 12 | 645 | 1.14 | 1.21 | N | N | 106 | 2.0 |
| Embodiment 13 | 845 | 1.16 | 1.01 | N | N | 106 | 2.1 |
| Embodiment 14 | 595 | 1.02 | 5.83 | N | N | 98 | 1.9 |
| Embodiment 15 | 595 | 1.07 | 8.91 | N | N | 98 | 1.9 |
| Embodiment 16 | 395 | 1.09 | 7.24 | N | N | 104 | 2.4 |
| Comparative Embodiment 1 | 300 | / | / | Y | Y | 97 | 1.7 |
| Comparative Embodiment 2 | 2200 | / | / | / | / | 100 | 2.6 |
| Comparative Embodiment 3 | 495 | 1.13 | 1.23 | Y | N | 106 | 1.9 |

As shown in Table 1, the reflection structures provided by the present disclosure have a small thickness, high brightness, good stiffness, and great light shielding property (or shading property), and the assembled panel lamp can be light in weight. Among them, the reflection structures in Embodiment 3 to Embodiment 7 and Embodiment 9 to Embodiment 13 can have better overall performance, the thickness is in a range of 445 µm to 845 µm, the relative brightness is at least 102%, there is no collapse deformation phenomenon and no light leakage phenomenon, and weight of the assembled panel lamps (size: 600 mm × 600 mm) is at most 2.1 kg. In particular, the overall performance of the reflection structure in Embodiments 7, 9 to 11 can be better, the thickness is 533 µm to 595 µm, the relative brightness is at least 106%, there is no collapse deformation, and no light leakage, and weight of the assembled panel lamp (600 mm ×600 mm) is at most 1.9 kg.

The thickness, stiffness, light-shielding property, relative brightness, and weight of the reflection structures of Embodiment 17 to Embodiment 32 were tested, and the test results were the same as those of Embodiment 1 to Embodiment 16. It can be seen that the position of the light shielding layer in the reflection structure has no effect on the thickness, stiffness, light-shielding property, relative brightness, and weight of the reflection structure.

The reflection structures of Embodiment 1 to Embodiment 32 were taken a friction test, and the test condition was 1 kg. When repeating 200 times of rubbing, the test result is that all of the reflection structures are opaque. When repeating 500 times of rubbing, the test result is the reflection structures of Embodiment 17 to Embodiment 32 are opaque, and parts of the reflection structures of Embodiment 1 to Embodiment 16 are slightly transparent.

The reflection structures of Embodiment 1 to Embodiment 16 were tested for the coefficient of thermal expansion. The test was performed using an American TA thermal analyzer with a model number of TMA Q400. The test results were shown in Table 2.

**Table 2**

| | Reflection structure (cm/(cm·°C)) | Reflection layer (cm/(cm·°C)) | Enhancement layer (cm/(cm·°C)) | Light shielding layer (cm/(cm·°C)) |
|---|---|---|---|---|
| Embodiment 1 | MD: 2.79×10⁻⁵ | MD: 2.76×10⁻⁵ | MD: 2.73×10⁻⁵ | 2.81×10⁻⁵ |
| | TD: 2.07×10⁻⁵ | TD: 1.83×10⁻⁵ | TD: 1.78×10⁻⁵ | |
| Embodiment 2 | MD: 2.76×10⁻⁵ | MD: 2.72×10⁻⁵ | MD: 2.70×10⁻⁵ | 2.86×10⁻⁵ |
| | TD: 2.09×10⁻⁵ | TD: 1.84×10⁻⁵ | TD: 1.80×10⁻⁵ | |
| Embodiment 3 | MD: 2.74×10⁻⁵ | MD: 2.73×10⁻⁵ | MD: 2.71×10⁻⁵ | 2.75×10⁻⁵ |
| | TD: 2.05×10⁻⁵ | TD: 1.84×10⁻⁵ | TD: 1.74×10⁻⁵ | |
| Embodiment 4 | MD: 2.76×10⁻⁵ | MD: 2.75×10⁻⁵ | MD: 2.76×10⁻⁵ | 2.77×10⁻⁵ |
| | TD: 2.06×10⁻⁵ | TD: 1.80×10⁻⁵ | TD: 1.73×10⁻⁵ | |
| Embodiment 5 | MD: 2.77×10⁻⁵ | MD: 2.78×10⁻⁵ | MD: 2.77×10⁻⁵ | 2.76×10⁻⁵ |
| | TD: 2.05×10⁻⁵ | TD: 1.82×10⁻⁵ | TD: 1.73×10⁻⁵ | |
| Embodiment 6 | MD: 2.75×10⁻⁵ | MD: 2.74×10⁻⁵ | MD: 2.70×10⁻⁵ | 2.80×10⁻⁵ |
| | TD: 2.09×10⁻⁵ | TD: 1.80×10⁻⁵ | TD: 1.73×10⁻⁵ | |
| Embodiment 7 | MD: 2.81×10⁻⁵ | MD: 2.78×10⁻⁵ | MD: 2.79×10⁻⁵ | 2.84×10⁻⁵ |
| | TD: 2.11×10⁻⁵ | TD: 1.89×10⁻⁵ | TD: 1.85×10⁻⁵ | |
| Embodiment 8 | MD: 2.74×10⁻⁵ | MD: 2.70×10⁻⁵ | MD: 2.77×10⁻⁵ | 2.76×10⁻⁵ |
| | TD: 2.03×10⁻⁵ | TD: 1.79×10⁻⁵ | TD: 1.72×10⁻⁵ | |
| Embodiment 9 | MD: 2.74×10⁻⁵ | MD: 2.72×10⁻⁵ | MD: 2.78×10⁻⁵ | 2.78×10⁻⁵ |
| | TD: 2.05×10⁻⁵ | TD: 1.85×10⁻⁵ | TD: 1.71×10⁻⁵ | |
| Embodiment 10 | MD: 2.78×10⁻⁵ | MD: 2.71×10⁻⁵ | MD: 2.77×10⁻⁵ | 2.80×10⁻⁵ |
| | TD: 2.06×10⁻⁵ | TD: 1.86×10⁻⁵ | TD: 1.72×10⁻⁵ | |
| Embodiment 11 | MD: 2.75×10⁻⁵ | MD: 2.73×10⁻⁵ | MD: 2.77×10⁻⁵ | 2.81×10⁻⁵ |
| | TD: 2.10×10⁻⁵ | TD: 1.80×10⁻⁵ | TD: 1.72×10⁻⁵ | |
| Embodiment 12 | MD: 2.77×10⁻⁵ | MD: 2.75×10⁻⁵ | MD: 2.79×10⁻⁵ | 2.76×10⁻⁵ |
| | TD: 2.08×10⁻⁵ | TD: 1.85×10⁻⁵ | TD: 1.71×10⁻⁵ | |
| Embodiment 13 | MD: 2.75×10⁻⁵ | MD: 2.74×10⁻⁵ | MD: 2.71×10⁻⁵ | 2.79×10⁻⁵ |
| | TD: 2.09×10⁻⁵ | TD: 1.87×10⁻⁵ | TD: 1.75×10⁻⁵ | |
| Embodiment 14 | MD: 2.75×10⁻⁵ | MD: 2.73×10⁻⁵ | MD: 2.76×10⁻⁵ | 2.74×10⁻⁵ |
| | TD: 2.10×10⁻⁵ | TD: 1.86×10⁻⁵ | TD: 1.74×10⁻⁵ | |
| Embodiment 15 | MD: 2.75×10⁻⁵ | MD: 2.74×10⁻⁵ | MD: 2.72×10⁻⁵ | 2.76×10⁻⁵ |
| | TD: 2.09×10⁻⁵ | TD: 1.86×10⁻⁵ | TD: 1.72×10⁻⁵ | |
| Embodiment 16 | MD: 2.76×10⁻⁵ | MD: 2.73×10⁻⁵ | MD: 2.75×10⁻⁵ | 2.80×10⁻⁵ |
| | TD: 2.06×10⁻⁵ | TD: 1.83×10⁻⁵ | TD: 1.73×10⁻⁵ | |

In Table 2, MD represents a coefficient of thermal expansion in a longitudinal direction, and TD represents a coefficient of thermal expansion in a lateral direction. It can be seen from Table 2 that the coefficient of thermal expansion in the longitudinal direction and the coefficient of thermal expansion in the lateral direction of the reflection structure are both small. Therefore, the reflection structure will not be thermal warpage, deformation and other adverse phenomena even for a long time. Moreover, the differences of the coefficient of thermal expansion in the longitudinal direction between the reflection layer 1, the enhancement layer 2 and the light shielding layer 3 are small, and so as the differences of the coefficient of thermal expansion in the lateral direction between the reflection layer 1, the enhancement layer 2 and the light shielding layer 3. Therefore, during the long-term use, light leakage or collapse can be prevented due to the small difference of thermal expansion property between the layers of the reflection structure.

Hereinafter, the reflection structure and its application will be further described through the following embodiments.

The technical features of the above-described embodiments may be combined in any combination. For the sake of brevity of description, all possible combinations of the technical features in the above embodiments are not described. However, as long as there is no contradiction between the combinations of these technical features, all should be considered as within the scope of this disclosure.

The above-described embodiments are merely illustrative of several embodiments of the present disclosure, and the description thereof is relatively specific and detailed, but is not to be construed as limiting the scope of the disclosure. It should be noted that a number of variations and modifications may be made by those skilled in the art without departing from the spirit and scope of the disclosure. Therefore, the scope of the disclosure should be determined by the appended claims.

## Claims

1. A reflection structure, **characterized in that**, comprising a reflection layer, a light shielding layer and an enhancement layer stacked together, wherein a thickness of the light shielding layer is in a range of 10 nm to 250 µm, and a density of the reflection structure is in a range of 0.5 g/cm³ to 2.7 g/cm³.

2. The reflection structure of claim 1, wherein a thickness of the reflection layer is in a range of 50 µm to 500 µm, and a thickness of the enhancement layer is in a range of 50 µm to 1000 µm.

3. The reflection structure of claim 2, wherein a ratio of a sum of the thickness of the enhancement layer and the thickness of the light shielding layer to the thickness of the reflection layer is greater than 0.55:1.

4. The reflection structure of claim 3, wherein the ratio of the sum of the thickness of the enhancement layer and the thickness of the light shielding layer to the thickness of the reflection layer is in a range of 0.6:1 to 1.8:1.

5. The reflection structure of claim 1, wherein under a temperature of 30 degrees centigrade to 80 degrees centigrade, a coefficient of thermal expansion of the reflection structure in a longitudinal direction is in a range of 10⁻⁶ cm/(cm·°C) to 10⁻⁴ cm/(cm·°C), and a coefficient of thermal expansion of the reflection structure in a lateral direction is in a range of 10⁻⁶ cm/(cm·°C) to 10⁻⁴ cm/(cm·°C).

6. The reflection structure of claim 1, wherein under a temperature of 30 degrees centigrade to 80 degrees centigrade, a coefficient of thermal expansion of the reflection layer in a longitudinal direction is in a range of 10⁻⁶ cm/(cm·°C) to 10⁻⁴ cm/(cm·°C), and a coefficient of thermal expansion of the reflection layer in a lateral direction is in a range of 10⁻⁶ cm/(cm·°C) to 10⁻⁴ cm/(cm·°C).

7. The reflection structure of claim 1, wherein under a temperature of 30 degrees centigrade to 80 degrees centigrade, a coefficient of thermal expansion of the enhancement layer in a longitudinal direction is in a range of 10⁻⁶ cm/(cm·°C) to 10⁻⁴ cm/(cm·°C), and a coefficient of thermal expansion of the enhancement layer in a lateral direction is in a range of 10⁻⁶ cm/(cm·°C) to 2×10⁻⁴ cm/(cm·°C).

8. The reflection structure of claim 1, wherein under a temperature of 30 degrees centigrade to 80 degrees centigrade, a coefficient of thermal expansion of the light shielding layer is in a range of 10⁻⁷ cm/(cm·°C) to 3.0×10⁻⁴ cm/(cm·°C).

9. The reflection structure of claim 1, wherein a light transmittance of the light shielding layer is less than or equal to 20%.

10. The reflection structure of claim 1, wherein the light shielding layer is at least one of a metal layer, a metal plated film, a hot gold foil, a laser film, an ink layer, a composite layer of an oxide and a polymer, and a light shielding plastic film.

11. The reflection structure of claim 10, wherein the composite layer of the oxide and the polymer comprises one oxide layer and one polymer layer stacked; or
the composite layer of the oxide and the polymer comprises at least two oxide layers and the at least two polymer layers, which are stacked one by one alternately,
wherein a material of the oxide layer is at least one of SiOx and AlOx, and a material of the polymer layer is an acrylic polymer.

12. The reflection structure of claim 1, wherein a material of the reflection layer is a plastic and the plastic is at least one of polyethylene terephthalate, polypropylene terephthalate, polybutylene terephthalate, polyethylene naphthalate, polyvinyl chloride, polycarbonate, polyethylene, polypropylene, polystyrene, and polyamide.

13. The reflection structure of claim 12, wherein a material of the enhancement layer is glass and/or the plastic.

14. The reflection structure of claim 1, wherein the reflection layer comprises a plurality of micropores.

15. The reflection structure of claim 1, wherein the reflection layer comprises a PET layer and a plurality of micropores distributed in the PET layer, the enhancement layer is a PET layer, and the light shielding layer is a metal-plated film, wherein the metal-plated film is a metal-plated PET film.

16. The reflection structure of claim 1, wherein the light shielding layer is disposed between the reflection layer and the enhancement layer; or
the enhancement layer is disposed between the reflection layer and the light shielding layer.

17. A panel lamp comprising a light guide plate and a frame, wherein the panel lamp further comprises the reflection structure of any one of claims 1 to 16, and the light guide plate and the reflection structure are fixed by the frame.

18. A display comprising a backlight module which comprises a light guide plate and a frame, **characterized in that**, the backlight module further comprises the reflection structure of any one of claims 1 to 16, and the light guide plate and the reflection structure are fixed by the frame.
